# EUROPEAN PATENT SPECIFICATION

(11) **EP 3 457 640 B1**
(45) Date of publication and mention of the grant of the patent: **22.06.2022**
(21) Application number: 17795466.6
(22) Date of filing: 03.05.2017
(51) Int. Cl.: H04L 45/00, H04L 45/64

(54) **ROUTE ESTABLISHMENT AND MESSAGE SENDING**
ROUTENFESTLEGUNG UND SENDEN VON NACHRICHTEN
ÉTABLISSEMENT D'ITINÉRAIRE ET ENVOI DE MESSAGE

(30) Priority: 10.05.2016 CN 201610305131
(43) Date of publication of application: 20.03.2019
(73) Proprietor: New H3C Technologies Co., Ltd., Binjiang District Hangzhou Zhejiang 310052 (CN)
(72) Inventor: FAN, Chao, Beijing 100085 (CN); WANG, Hai, Beijing 100085 (CN)
(74) Representative: Klunker IP Patentanwälte PartG mbB
(86) International application number: PCT/CN2017/082897
(87) International publication number: WO 2017/193848

(56) References cited:
- EP-A1- 2 892 183
- WO-A1-2015/123987
- CN-A- 103 607 349
- CN-A- 103 607 349
- CN-A- 105 357 099
- US-A1- 2014 211 615
- US-A1- 2015 381 493
- BEHZAD MIRKHANZADEH ET AL: "SDxVPN: A Software-Defined Solution for VPN Service Providers", ARXIV.ORG, CORNELL UNIVERSITY LIBRARY, 201 OLIN LIBRARY CORNELL UNIVERSITY ITHACA, NY 14853, 11 February 2016 (2016-02-11), XP080683035,

## Description

### Technical field

The present invention relates to the technical field of communication, specifically to a message sending method.

### Background Art

Software Defined Network (SDN) technology, which can separate a control plane from a forwarding plane, breaks closed properties of a conventional network switch/router design, improves programmability of network management, and reduces complexity of the network switch/router.

SDN may include a gateway device, a controller, a switching device, a terminal device, and so on. The controller, as a control center, can generate a flow table according to configuration of a user or a protocol in dynamic operation and send the flow table to the switching device. The switching device can further send the flow table to various terminal devices connected thereto. After receiving a message (packet), the switching device or the terminal device can send the message according to a locally-stored flow table. The above terminal device may be a virtual machine.

US 2015/381493 A1 describes a service chaining across multiple networks comprising a controller having one or more processors; a control unit configured to obtain, from a router in a first network, a route that specifies a next hop to an address prefix reachable by the first network; and a service chain unit configured to generate a modified route that specifies a service node as the next hop for the address prefix, wherein the service node is external to the first network, and wherein the control unit is further configured to send the modified route to a second network, the modified route marked with an import route target configured for a provider edge router of the second network so that traffic from the first network and destined for the second network is forwarded to the service node.

CN 103 607 349 A describes a method for determining a route in a virtual network. According to the method, a provider edge (PE) equipment obtains a virtual network forward (VNF) corresponding to one user identifier, wherein the VNF includes a corresponding relation between a destination address prefix of a virtual network and a virtual interface of the PE equipment and according to the VNF and a corresponding relation between the virtual interface of the PE equipment and a channel identity (ID). The PE equipment generates a virtual route forward (VRF) corresponding to the user identifier, wherein the VRF includes a corresponding relation between the destination address prefix of the virtual network and the channel ID.

WO 2015/123987 A1 describes a packet forwarding method. According to this method, a first network virtualization edge (NVE) receives a first packet transmitted by a first tenant end system (TES), the destination IP address of the first packet being the IP address of a second TES, the destination MAC address of the first packet being a gateway MAC address corresponding to the first NVE, the first TES and the second TES belonging to the same layer 3 VPN; the first NVE obtains an access VN ID of the first TES according to at least one of the first packet and the port information for receiving the first packet, and obtains the identifier of a layer 3 VPN instance of the first TES; the first NVE performs layer 2 termination on the first packet, looks up a route forwarding table corresponding to the identifier of the layer 3 VPN instance of the first TES, to obtain an entry corresponding to the IP address of the second TES, and encapsulates the first packet into a network virtualization overlays(NVO3) packet according to the entry; the first NVE forwards the NVO3 packet to the second NVE by layer 3, and the second TES accesses the second NVE.

### Summary

It is an object of the present invention to provide a message sending method, which may solve one or more problems in the art. The object is achieved by the features of the respective independent claims. Further embodiments are defined in the corresponding dependent claims.

### Brief Description of Drawings

In order to more clearly illustrate technical solutions of examples of the present disclosure, accompanying drawings which are needed for description of the examples will be introduced briefly below. Apparently, the accompanying drawings in the description below are merely for some examples of the present disclosure, and a person ordinarily skilled in the art still can obtain other relevant figures according to these accompanying drawings, without paying inventive efforts.
FIG. 1 is a flow chart of a route establishment method provided in examples of the present disclosure.
FIG. 2 is a flow chart of a message sending method provided in examples of the present disclosure.
FIG. 3 is a structural schematic diagram of a route establishment apparatus provided in examples of the present disclosure.
FIG. 4 is a structural schematic diagram of another route establishment apparatus provided in examples of the present disclosure.
FIG. 5 is a structural schematic diagram of a message sending apparatus provided in examples of the present disclosure.
FIG. 6 is a schematic diagram of a route establishment process in examples of the present disclosure.
FIG. 7 is a schematic diagram of a message sending process in examples of the present disclosure.

### Detailed Description of Embodiments

In a Virtual Private Network (VPN), two types of routing devices may be included: Provider Edge (PE) device and Customer Edge (CE) device. Moreover, in the VPN, a user CE device, a user PE device, a provider CE device, and a provider PE device may practically exist. In practical application, various devices can learn routing information of various devices in a network by transmitting VPN-IPv4 routing information among them. Specifically, the user CE device can send, to the user PE device, the VPN-IPv4 routing information carrying its own routing information, the user PE device can send the VPN-IPv4 routing information to the provider CE device, the provider CE device can send the VPN-IPv4 routing information to the provider PE device, and the provider PE device can send the VPN-IPv4 routing information to an opposite (opposite-end) provider PE device. Moreover, the opposite provider PE device can further send the VPN-IPv4 routing information to the user CE device through a provider CE device and a user PE device thereof, thus completing the transmission of the routing information. Any device, after receiving a data message, can send the data message through a routing it stores.

An SDN can be in nested connection with a layer-two or layer-three network, for example, the SDN is nested with the VPN, wherein the SDN and the VPN can be connected via a gateway device in the SDN. Since the SDN directs the message sending by an openflow table, and the layer-three network directs the message sending by a route entry, the gateway device and various PE and CE devices in the VPN cannot obtain route addresses, for example, 32-bit address information, of various terminal devices in the SDN. The terminal device in the SDN may be a server, vRouter (virtual Router), VM (virtual machine), and of course, if VXLAN tunnel connection is present in the SDN, the terminal device also may be VTEP (VXLAN Tunnel End Point, VXLAN nodepoint device).

At this time, if an original device in the VPN cannot bear an access pressure due to increased access pressure, some or all of business data inside the VPN should be sent to the terminal devices in the SDN in this situation, so as to relieve the pressure of being accessed for the original device in the VPN. Since the sending of data in the SDN is completed by the flow table issued by the controller, in the gateway device, there is no routing information of the terminal devices in the SDN, thus the device in the VPN cannot send the message to the terminal device in the SDN according to a corresponding route entry. Therefore, the network has to be re-planned, for example, a new sub network is added, as a result, the process of sending the business data from the VPN to the SDN is too complicated.

In order to reduce the complexity of sending the business data in the VPN to the SDN, methods and apparatus for route establishment and message sending are provided in examples of the present disclosure. In the examples of the present disclosure, address information of various terminal devices stored in the SDN is acquired by a controller in the SDN, to generate routing information, and the routing information is sent to various devices in the VPN, for example, PE, CE devices in the VPN, via the gateway device, which is connected to the VPN, in the SDN by using a corresponding routing protocol (e.g. BGP routing protocol). When the PE or CE device in the VPN needs to upload the message (such as business data message) to the terminal devices in the SDN, the message can be sent according to the acquired routing information, thus there is no need to re-plan the network, reducing the complexity of sending the message in the VPN to the terminal devices in the SDN.

Below the technical solutions of the examples of the present disclosure are described clearly and completely in combination with the accompanying drawings in the examples of the present disclosure. Apparently, some but not all of the examples of the present disclosure are described. All the other examples, which a person ordinarily skilled in the art obtains based on the examples of the present disclosure without paying inventive efforts, shall fall within the scope of protection of the present disclosure.

It should be noted that the examples of the present disclosure and the features of the examples can be combined with each other if there is no conflict. The present disclosure will be described in detail below with reference to the accompanying drawings and in combination with examples.

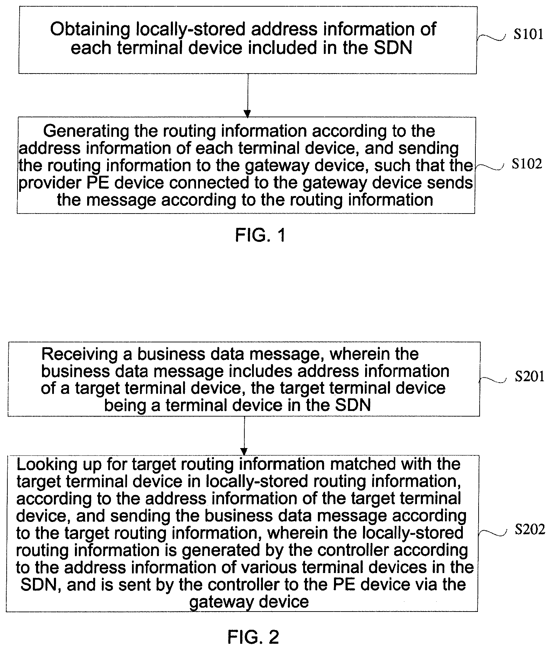

In order to reduce the complexity of transferring the business data in the VPN to the SDN, a process for a route establishment method is provided in examples of the present disclosure, applied to a controller in a Software Defined Network (SDN). As shown in FIG. 1, the process includes following steps.

In Step S101, a controller can obtain locally-stored address information of each terminal device included in the SDN.

In an example of the present disclosure, the address information of each terminal device in the SDN is acquired, and routing information can be generated according to the acquired address information, wherein the routing information may include a route entry, or also may include a part of information in the route entry, for example, a source address, a target address, RD, RT and other information.

In an example of the present disclosure, BGP neighbors are established for the controller and a gateway device, the routing information of various terminal devices generated in the SDN can be transmitted to various devices in the VPN via the gateway device by means of the BGP protocol, further enabling the various devices in the VPN to acquire the routing information of the various terminal devices in the SDN, such that various devices in the VPN each can send a message to the respective terminal devices in the SDN according to the acquired routing information. In this way, the complexity of sending the business data in the VPN to the SDN can be reduced. To this end, a neighbor relationship can be established between the controller and the gateway device in the SDN. The gateway device may be further configured in advance with a border gateway protocol (BGP) routing protocol, moreover, the gateway device may be further connected to a provider PE device in the VPN.

In an example of the present disclosure, the controller can obtain locally-stored address information of each terminal device included in the SDN. In the above, the above terminal device may be a virtual machine in the SDN. Correspondingly, the address information of the terminal device may include vport (i.e. virtual port) data.

For example, the controller can locally build a database in advance, and acquire the address information of each terminal device included in the SDN, and further can store in the database the obtained address information of each terminal device, so as to facilitate the controller in acquiring the address information of each terminal device in the SDN.

In Step S102, the controller can generate the routing information according to the address information of each terminal device, and send the routing information to the gateway device, such that the provider PE device connected to the gateway device establishes a routing according to the routing information, i.e. sends the message according to the routing information.

After obtaining the address information of each terminal device, the controller can generate the routing information according to the address information of each terminal device, for example, the controller can generate a route entry used for sending the message, the route entry carrying the routing information. Then, the routing information can be sent to the gateway device. In the above, the routing information may include: address information of a terminal device, for example, interface information, an IP address, an MAC address, and so on.

When generating the routing information according to the address information of various terminal devices, the controller can map vport data of the various terminal devices to a VPN routing according to a mapping table, to obtain IP addresses, MAC addresses, and so on of the various terminal devices. The mapping table defines a data structure, in which a name of the controller, a name of the VPN, a type of a port, RD information for distinguishing different VPNs, extended community attribute (Route target, RT) information for controlling publishing and learning of VPN routing information, MAC addresses and IP addresses of terminal devices, and so on can be defined. The controller can extract information that needs to be transferred from locally-stored vport data of various terminal devices, and map the extracted information as the VPN routing information according to the mapping table. Then, the VPN routing information can be sent to the gateway device in a form of BGP update message.

In an example of the present disclosure, after receiving the routing information sent to a gateway device by the controller, the gateway device can send the routing information to the provider PE device connected to itself in the VPN, so as to transmit the routing information to the VPN.

After the provider PE device receives the routing information sent to the provider PE device via the gateway device, the provider PE device can publish in the VPN the routing information it receives. For example, the provider PE device can send the routing information to all of the PE device and the CE device connected to itself, such that all of the devices in the VPN store the routing information received by the provider PE device. Furthermore, when the business data needs to be transferred to the SDN, the various devices each can send the business data message they receive according to the locally-stored routing information.

A process for the provider PE device publishing in the VPN the routing information it receives is not repeated redundantly herein.

In one example, the above routing information may further include Route Distinguisher (RD) information corresponding to each terminal device, so as to act as a tag for isolating the VPNs in a transmission process. In the VPN application, IP address spaces of different VPNs are independent, and in order to distinguish the IP addresses of different VPN examples in a public network, RD information can be used as a tag for isolating the VPNs. In a nested network of SDN and VPN according to the present disclosure, various terminal devices in the SDN, for example, vRouter of each tenant, can be construed as corresponding to one VPN example. When the controller in the SDN generates the routing information according to the locally-stored vport data of various terminal devices, the RD information can be added to the routing information, such that when the routing information is sent to the PE device via the gateway device, the PE device can distinguish different terminal devices according to the RD information.

It can be seen from the above example that the controller in the SDN can obtain the address information of each terminal device included in the SDN, and generate the routing information according to the address information of each terminal device. Furthermore, the controller can send the routing information to the provider PE device in the VPN via the gateway device. Therefore, various devices in the VPN can locally store the routing information generated by the controller. When performing the business data transferring, any device in the VPN can send the business data message to the SDN according to the locally-stored routing information, without adding a new sub network or re-planning the network. Therefore, the complexity of transferring the business data in the VPN to the SDN can be reduced.

In one example, it is further provided another route establishment method, applied to a provider PE device in a Virtual Private Network (VPN). According to the route establishment method, the provider PE device can receive routing information sent via the gateway device, wherein the routing information is generated by a controller according to address information of various terminal devices in the SDN and sent to the gateway device.

In an example of the present disclosure, the address information of various terminal devices included in the SDN can be transmitted to the Virtual Private Network (VPN), and further corresponding routing can be stored in various devices of the VPN. In this way, the complexity of transferring the business data in the VPN to the SDN can be reduced. In this regard, a neighbor relationship can be established between the controller and the gateway device in the SDN, the gateway device may be further configured in advance with a border gateway protocol (BGP) routing protocol, moreover, the gateway device may be further connected to the provider PE device in the VPN.

In an example of the present disclosure, the controller can obtain locally-stored address information of each terminal device included in the SDN. Then, the controller can generate the routing information according to the address information of each terminal device, and send the routing information to the gateway device. In the above, the above terminal device may be a virtual machine in the SDN. Correspondingly, the address information of the terminal device may be vport data.

In an example of the present disclosure, after receiving the routing information sent to the gateway device by the controller, the gateway device can send the routing information to the provider PE device connected to itself in the VPN, so as to transmit the routing information to the VPN. Therefore, in an example of the present disclosure, the provider PE device can receive the routing information sent via the gateway device.

In one example, the provider PE device also may publish in the VPN the routing information it receives. For example, the provider PE device can send the routing information it receives to the PE device and/or the CE device connected to itself, such that all of the various devices in the VPN store the routing information received by the provider PE device. Furthermore, when the business data needs to be transferred to the SDN, all of the devices can send the business data message they receive according to the locally-stored routing information.

Since the BGP neighboring relationship can be established between the various PE devices and CE devices in the VPN, when a certain PE device in the VPN receives the routing information sent via the gateway device, the routing information can be sent to other PE device or CE device according to the BGP protocol, such that the various PE devices and CE devices in the VPN can obtain the routing information of various terminal devices in the SDN.

It can be seen from the above examples that the controller in the SDN can obtain the address information of each terminal device included in the SDN, and can generate the routing information according to the address information of each terminal device. Further, the routing information can be sent to the provider PE device, CE device in the VPN via the gateway device. Therefore, various PE devices, CE devices in the VPN can locally store the routing information of various terminal devices in the SDN. When any device in the VPN needs to send the business data message to the terminal device in the SDN, the business data message can be sent to the terminal device in the SDN according to the locally-stored routing information, without adding a new sub network or re-planning the network. Therefore, the complexity of sending the message in the VPN to the SDN can be reduced.

In another not claimed example, it is further provided a message sending method, applied to a provider PE device in a Virtual Private Network (VPN). As shown in FIG. 2, the method includes following steps.

In Step S201, the provider PE device can receive a business data message, wherein the business data message includes address information of a target terminal device, the target terminal device being any terminal device in the SDN.

When an original server cannot bear an access pressure due to an emergent demand in the VPN, some or all of business data in the VPN can be sent to the SDN. For example, any device in the VPN can generate a corresponding business data message for the business data to be sent. In the above, the business data message may include address information of the target terminal device. Moreover, the business data message can be further sent to the provider PE device.

Therefore, in an example of the present disclosure, the provider PE device can receive the business data message, wherein the business data message includes the address information of the target terminal device, wherein the target terminal is the terminal device in the SDN.

In Step S202, the provider PE device can look up in locally-stored routing information, according to the address information of the target terminal device, for target routing information matched with the target terminal device, and send the business data message according to the target routing information, wherein the locally-stored routing information is generated by the controller according to the address information of various terminal devices in the SDN, and is sent by the controller to the PE device via the gateway device.

In an example of the present disclosure, the provider PE device in the VPN can be connected to the gateway device in the SDN. Moreover, the gateway device in the SDN can send the routing information to the provider PE device in the VPN, the routing information being generated by the controller according to the address information of various terminal devices in the SDN and sent to the gateway device.

After receiving the business data message, the provider PE device can send the business data message to the gateway device, so as to send the corresponding business data to the SDN.

For example, the provider PE device can look up in the locally-stored routing information, according to the address information of the target terminal device, for the target routing information matched with the target terminal device, and send the business data message according to the target routing information.

According to an example of the present disclosure, after receiving the business data message, the PE device in the VPN can send the business data message to the terminal device in the SDN corresponding to the address information of the target terminal device, according to the address information of the target terminal device included in the business data message, and the locally-stored routing information, without adding a new sub network or re-planning the network. Therefore, the complexity of transferring the business data in the VPN to the SDN can be reduced.

Corresponding to the above method example, an example of the present disclosure further provides a corresponding apparatus example.

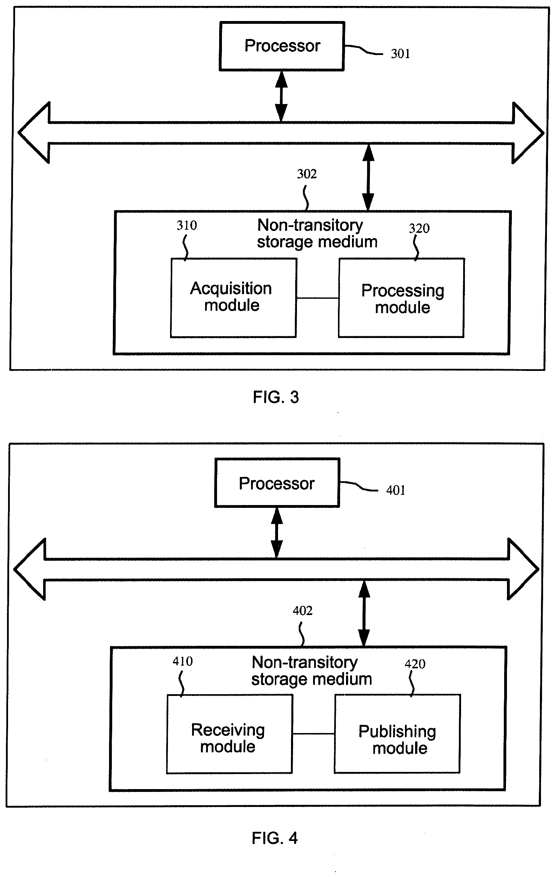

FIG. 3 shows a route establishment apparatus provided in examples of the present disclosure, applied to a controller in a Software Defined Network (SDN), wherein a neighbor relationship is established between the controller and a gateway device in the SDN, the gateway device is configured with a border gateway protocol (BGP) routing protocol, and the gateway device is connected to a provider PE device in a Virtual Private Network (VPN). The apparatus includes: a processor 301 and a non-transitory storage medium 302. The non-transitory storage medium 302 stores multiple machine-readable instruction modules executed by the processor 301. The multiple machine-readable instruction modules include an acquisition module 310 and a processing module 320.

The acquisition module 310 is configured to obtain locally-stored address information of each terminal device included in the SDN, wherein a neighbor relationship is established between the controller and the gateway device in the SDN, the gateway device is configured with a border gateway protocol (BGP) routing protocol, and the gateway device is connected to a provider edge (PE) device in the Virtual Private Network (VPN).

The processing module 320 is configured to generate routing information according to the address information of each terminal device, and send the routing information to the PE device via the gateway device, such that the PE device sends a message according to the routing information.

Furthermore, the routing information further includes Route Distinguisher (RD) information corresponding to each terminal device.

In the route establishment apparatus provided in the example of the present disclosure, the controller in the SDN can obtain the address information of each terminal device included in the SDN, and generate the routing information according to the address information of each terminal device. Further, the routing information can be sent to the provider PE device in the VPN via the gateway device. Therefore, various devices in the VPN can locally store the routing information. When any device in the VPN needs to send the business data message to the terminal device in the SDN, the business data message can be sent to the terminal device in the SDN according to the locally-stored routing information, without adding a new sub network or re-planning the network. Therefore, the complexity of transferring the business data in the VPN to the SDN can be reduced.

FIG. 4 shows a route establishment apparatus provided in examples of the present disclosure, applied to a provider PE device in a Virtual Private Network (VPN), wherein the provider PE device is connected to a gateway device in a Software Defined Network (SDN), a neighbor relationship is established between the gateway device and the controller in the SDN, and the gateway device is configured with a border gateway protocol (BGP) routing protocol. The apparatus includes: a processor 401 and a non-transitory storage medium 402. The non-transitory storage medium 402 stores multiple machine-readable instruction modules executed by the processor 401. The multiple machine-readable instruction modules include a receiving module 410.

The receiving module 410 is configured to receive routing information sent via the gateway device, wherein the routing information is generated by the controller according to the address information of various terminal devices in the SDN and sent to the gateway device.

In another example, the apparatus further includes:
a publishing module 420, configured to publish the routing information in the VPN.

According to an example of the present disclosure, the controller in the SDN can obtain the address information of each terminal device included in the SDN, and generate the routing information according to the address information of each terminal device. Further, the routing information can be sent to the provider PE device in the VPN via the gateway device. Therefore, various devices in the VPN can locally store the routing information generated by the controller. When any device in the VPN needs to send the business data message to the terminal device in the SDN, the business data message can be sent to the terminal device in the SDN according to the locally-stored routing information, without adding a new sub network or re-planning the network. Therefore, the complexity of transferring the business data in the VPN to the SDN can be reduced.

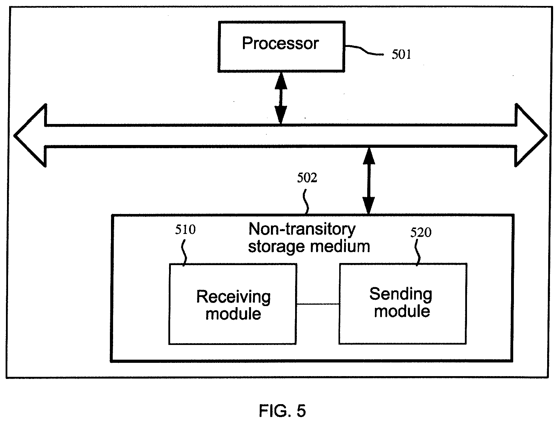

FIG. 5 shows a message sending apparatus provided in non-claimed examples of the present disclosure, applied to a provider PE device in a Virtual Private Network (VPN), wherein the provider PE device is connected to a gateway device in a Software Defined Network (SDN). The apparatus includes: a processor 501 and a non-transitory storage medium 502. The non-transitory storage medium 502 stores multiple machine-readable instruction modules executed by the processor 501. The multiple machine-readable instruction modules include a receiving module 510 and a sending module 520.

The receiving module 510 is configured to receive a business data message, wherein the business data message includes address information of a target terminal device in the SDN.

The sending module 520 is configured to look up in locally-stored routing information, according to the address information of the target terminal device, for target routing information matched with the target terminal device, and send the business data message according to the target routing information, wherein the locally-stored routing information is generated by the controller according to the address information of various terminal devices in the SDN, and sent to the PE device by the controller via the gateway device.

According to an example of the present disclosure, after receiving the business data message, the PE device in the VPN can send the business data message to the gateway device, according to the address information of the target terminal device included in the business data message and the locally-stored routing information, without adding a new sub network or re-planning the network. Therefore, the complexity of transferring the business data in the VPN to the SDN can be reduced.

Below the route establishment method provided in the present disclosure is described in detail in combination with one specific example.

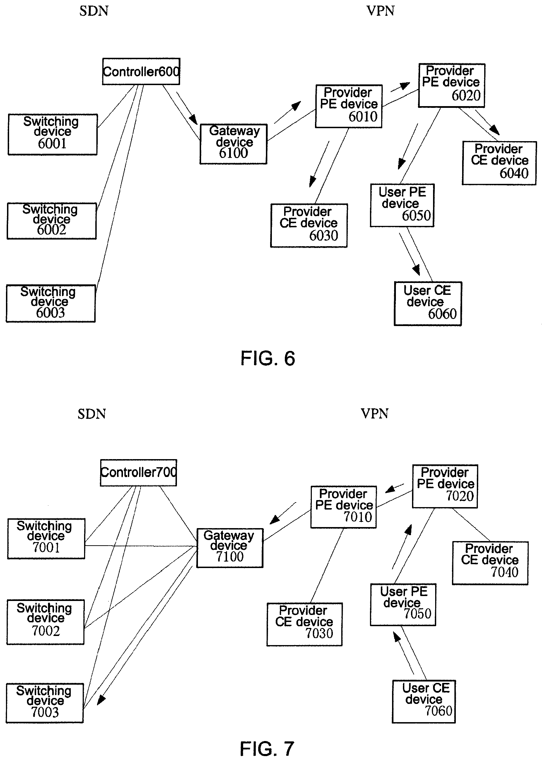

As shown in FIG. 6, an SDN and a nested VPN are included in an overall network structure of the present example. The SDN includes a controller 600, a switching device 6001, a switching device 6002, a switching device 6003, and a gateway device 6100, and the SDN may further include multiple virtual machines (not shown in the figure); the nested VPN includes a provider PE device 6010, a provider PE device 6020, a provider CE device 6030, a provider CE device 6040, a user PE device 6050, and a user CE device 6060. Moreover, the gateway device 6100 in the SDN is connected to the provider PE device 6010 in the VPN.

In an example of the present disclosure, the controller 600 in the SDN can obtain vport data of each virtual machine included in the SDN, and can generate routing information according to the vport data of each virtual machine, and send the routing information to the gateway device 6100.

After receiving the routing information sent to the gateway device by the controller 600, the gateway device 6100 can send the routing information to the provider PE device 6010 connected to itself in the VPN.

After receiving the routing information sent to the provider PE device via the gateway device 6100, the provider PE device 6010 can publish the routing information in the VPN. For example, the provider PE device 6010 can send the routing information to the provider PE device 6020 and the provider CE device 6030; further, the provider PE device 6020 can send the routing information to the provider CE device 6040 and the user PE device 6050; and the user PE device 6050 further sends the routing information to the user CE device 6060.

Below the message sending method provided in the present disclosure is described in detail in combination with one specific example.

As shown in FIG. 7, an SDN and a nested VPN are included in an overall network structure of the present example. The SDN includes a controller 700, a switching device 7001, a switching device 7002, a switching device 7003, and a gateway device 7100, and the SDN may further include multiple virtual machines (not shown in the figure); the nested VPN includes a provider PE device 7010, a provider PE device 7020, a provider CE device 7030, a provider CE device 7040, a user PE device 7050, and a user CE device 7060. Moreover, the gateway device 7100 in the SDN is connected to the provider PE device 7010 in the VPN.

In an example of the present disclosure, each device in the VPN has stored the routing information of various terminal devices in the SDN.

In the present example, for business of the type of resource website in the VPN, an original server may hardly bear a loading pressure due to an emergent demand. For example, for the business of providing a storage space such as network disk to users, it may be impossible for a server to provide a sufficient storage space to the users due to increased volume of business. At this time, this part of business data in the VPN can be sent to the terminal device in the SDN, that is, the business data in the VPN is sent to a terminal device in a cloud.

When the business data needs to be sent to the terminal device in the SDN, any device in the VPN, for example, a user CE device 8060, can generate a corresponding business data message for the business data to be transferred, wherein the business data message can include address information of a target virtual machine.

After generating the business data message, the user CE device 7060 can send the business data message to the user PE device 7050. Further, the user PE device 7050 can send the business data message to the provider PE device 7020, according to the address information of the target virtual machine included in the business data message and according to the locally-stored routing information. Further, the provider PE device 7020 can send the business data message to the provider PE device 7010, according to the address information of the target virtual machine included in the business data message and according to the locally-stored routing information. Further, the provider PE device 7010 can send the business data message to the gateway device 7100 in the SDN, according to the address information of the target virtual machine included in the business data message and according to the locally-stored routing information. After receiving the business data message, the gateway device 7100 can send the business data message to the target virtual machine, according to a locally-stored flow table and the address information of the target virtual machine included in the business data message. For example, the business data message can be sent by the switching device 7003 to a target virtual machine connected to the switching device 7003.

After the business data message is sent to the target virtual machine, the target virtual machine can share the loading pressure of the original server in the VPN. For example, still taking the business of providing to the user a network disk and like storage spaces as an example, after the business data message is sent to the target virtual machine, the target virtual machine can provide a certain storage space to the users, for the users to store contents they would like to store.

For the apparatus example, since it is substantially similar to the method example, the description is relatively simple, and reference can be made to the description of the method example for relevant parts.

It should be indicated that in the present text, relationship terms such as first, second, and so on are merely for distinguishing one entity or operation from another entity or operation, while it is not necessarily required or implied that these entities or operations have any such practical relationship or order. Moreover, terms "including", "containing" or any other derivatives thereof are intended to cover non-exclusive containing, thus a process, a method, an article or a device including a series of elements not only includes those elements, but also includes other elements that are not listed definitely, or further includes elements inherent to such process, method, article or device. Without more restrictions, an element defined with wordings "including a..." does not exclude presence of other same elements in the process, method, article or device including said element.

Various examples in the present disclosure are described in an associated manner, reference can be made for like or similar parts between the various examples, and focuses of each example are distinctions from other examples. Particularly, for a system example, since it is substantially similar to the method example, the description is relatively simple, and reference can be made to the description of the method example for relevant parts.

The above-mentioned are merely for preferred examples of the present disclosure, rather than limiting the scope of protection of the present disclosure.

## Claims

1. A message sending method in a network structure comprising a Software Defined Network, SDN, including a plurality of terminal devices (6001, 6002, 6003; 7001, 7002, 7003) and a nested Virtual Private Network, VPN, including a plurality of provider edge, PE, devices (6010, 6020; 7010, 7020), the method comprising:
a controller (600; 700) acquiring address information of each terminal device (6001, 6002, 6003; 7001, 7002, 7003) in the SDN and generating routing information according to the acquired address information,
the controller (600; 700) establishing a neighbor relationship between a gateway device (6100; 7100) and the controller in the SDN, wherein the gateway device (6100; 7100) in the SDN is connected to the VPN and is configured with a border gateway protocol, BGP, routing protocol, wherein at least one PE device (6010; 7010) in the VPN is connected to the gateway device (6100; 7100),
the gateway device (6100; 7100) transmitting the routing information of the terminal devices (6001, 6002, 6003; 7001, 7002, 7003) generated in SDN to the PE devices (6010; 7010) in the VPN using the BGP routing protocol, and
the gateway device (6100; 7100) enabling the PE devices (6010, 6020; 7010, 7020) in the VPN to acquire the routing information of the terminal devices (6001, 6002, 6003; 7001, 7002, 7003) in the SDN such that each of the several PE devices (6010, 6020; 7010, 7020) in VPN is configured to send a message to respective terminal devices (6001, 6002, 6003; 7001, 7002, 7003) in the SDN according to acquired routing information,
the method being **characterized by** further comprising
the controller (600, 700) extracting information needed to be transferred from locally-stored port data in the several terminal devices (6001, 6002, 6003; 7001, 7002, 7003) in the SDN during generating routing information, the terminal device (6001, 6002, 6003; 7001, 7002, 7003) in the SDN being a virtual machine,
the controller (600, 700) mapping the extracted information as VPN routing information according to a mapping table, and
the controller (600, 700) sending the VPN routing information to the gateway device (6100; 7100).

2. The method of claim 1, further comprising:
publishing, by the PE device (6010, 6020; 7010, 7020), the routing information in the VPN.

3. The method of claim 1 or 2, further comprising:
receiving (S201), by the PE device (6010, 6020; 7010, 7020), a data packet, wherein the data packet comprises address information of a target terminal device in the SDN; and
the PE device (6010, 6020; 7010, 7020) looking up (S202), in locally-stored routing information, for target routing information matched with the target terminal device according to the address information of the target terminal device, and sending the data packet according to the target routing information.

## Patentansprüche

1. Verfahren zum Senden von Nachrichten in einer Netzwerkstruktur, die ein Software Defined Network, SDN, mit einer Vielzahl von Endgeräten (6001, 6002, 6003; 7001, 7002, 7003) und ein verschachteltes Virtual Private Network, VPN, mit einer Vielzahl von Provider Edge, PE, Geräten (6010, 6020; 7010, 7020) umfasst, wobei das Verfahren umfasst:
einen Controller (600; 700), der Adressinformationen jedes Endgeräts (6001, 6002, 6003; 7001, 7002, 7003) in dem SDN erfasst und Routing-Informationen gemäß den erfassten Adressinformationen erzeugt,
der Controller (600; 700) eine Nachbarbeziehung zwischen einem Gateway-Gerät (6100; 7100) und dem Controller im SDN herstellt, wobei das Gateway-Gerät (6100; 7100) im SDN mit dem VPN verbunden ist und mit einem Border-Gateway-Protokoll, BGP, Routing-Protokoll konfiguriert ist, wobei mindestens ein PE-Gerät (6010; 7010) im VPN mit dem Gateway-Gerät (6100; 7100) verbunden ist,
das Gateway-Gerät (6100; 7100) die im SDN erzeugten Routing-Informationen der Endgeräte (6001, 6002, 6003; 7001, 7002, 7003) an die PE-Geräte (6010; 7010) im VPN unter Verwendung des BGP-Routing-Protokolls überträgt, und
die Gateway-Vorrichtung (6100; 7100), die es den PE-Geräten (6010, 6020; 7010, 7020) im VPN ermöglicht, die Routing-Informationen der Endgeräte (6001, 6002, 6003; 7001, 7002, 7003) im SDN zu erfassen, so dass jedes der mehreren PE- Geräte (6010, 6020; 7010, 7020) im VPN so konfiguriert ist, dass sie eine Nachricht an entsprechende Endgeräte (6001, 6002, 6003; 7001, 7002, 7003) im SDN gemäß den erfassten Routing-Informationen sendet,
wobei das Verfahren **dadurch gekennzeichnet ist, dass** es ferner umfasst
der Controller (600, 700) während der Erzeugung von Routing-Informationen Informationen, die übertragen werden müssen, aus lokal gespeicherten Port-Daten in den verschiedenen Endgeräten (6001, 6002, 6003; 7001, 7002, 7003) im SDN extrahiert, wobei das Endgerät (6001, 6002, 6003; 7001, 7002, 7003) im SDN eine virtuelle Maschine ist,
der Controller (600, 700) die extrahierten Informationen als VPN-Routing-Informationen gemäß einer Mapping-Tabelle abbildet, und
die Steuerung (600, 700) die VPN-Routing-Informationen an das Gateway-Gerät (6100; 7100) sendet.

2. Das Verfahren nach Anspruch 1 umfasst ferner:
Veröffentlichung der Routing-Informationen im VPN durch das PE-Gerät (6010, 6020; 7010, 7020).

3. Das Verfahren nach Anspruch 1 oder 2 umfasst ferner:
Empfangen (S201) eines Datenpakets durch das PE-Gerät (6010, 6020; 7010, 7020), wobei das Datenpaket Adressinformationen eines Zielendgeräts in dem SDN umfasst; und
das PE-Gerät (6010, 6020; 7010, 7020) sucht (S202) in lokal gespeicherten Routing-Informationen nach Ziel-Routing-Informationen, die mit dem Ziel-Endgerät übereinstimmen, gemäß den Adressinformationen des Ziel-Endgeräts, und sendet das Datenpaket gemäß den Ziel-Routing-Informationen.

## Revendications

1. Procédé d'envoi de messages dans une structure de réseaux qui comprend un réseau défini par logiciel, SDN, qui inclut une pluralité de dispositifs terminaux (6001, 6002, 6003 ; 7001, 7002, 7003) et un réseau privé virtuel, VPN, imbriqué qui inclut une pluralité de dispositifs périphériques de fournisseur, PE, (6010, 6020 ; 7010, 7020), le procédé comprenant :
le fait qu'un contrôleur (600 ; 700) acquiert une information d'adresse de chaque dispositif terminal (6001, 6002, 6003 ; 7001, 7002, 7003) dans le SDN et génère une information de routage en fonction de l'information d'adresse acquise ;
le fait que le contrôleur (600 ; 700) établit une relation de voisinage entre un dispositif de passerelle (6100 ; 7100) et le contrôleur dans le SDN, dans lequel le dispositif de passerelle (6100 ; 7100) dans le SDN est connecté au VPN et est configuré à l'aide d'un protocole de routage, soit le protocole de passerelle frontière, BGP, dans lequel au moins un dispositif PE (6010 ; 7010) dans le VPN est connecté au dispositif de passerelle (6100 ; 7100) ;
le fait que le dispositif de passerelle (6100 ; 7100) transmet l'information de routage des dispositifs terminaux (6001, 6002, 6003 ; 7001, 7002, 7003) qui est générée dans le SDN aux dispositifs PE (6010 ; 7010) dans le VPN en utilisant le protocole de routage BGP ; et
le fait que le dispositif de passerelle (6100 ; 7100) permet aux dispositifs PE (6010, 6020 ; 7010, 7020) dans le VPN d'acquérir l'information de routage des dispositifs terminaux (6001, 6002, 6003 ; 7001, 7002, 7003) dans le SDN de telle sorte que chacun des plusieurs dispositifs PE (6010, 6020 ; 7010, 7020) dans le VPN soit configuré pour envoyer un message sur les dispositifs terminaux respectifs (6001, 6002, 6003 ; 7001, 7002, 7003) dans le SDN en fonction de l'information de routage acquise ;
le procédé étant **caractérisé en ce qu'**il comprend en outre :
le fait que le contrôleur (600, 700) extrait une information qui doit être transférée à partir de données de port stockées localement dans les plusieurs dispositifs terminaux (6001, 6002, 6003 ; 7001, 7002, 7003) dans le SDN pendant la génération de l'information de routage, le dispositif terminal (6001, 6002, 6003 ; 7001, 7002, 7003) dans le SDN étant une machine virtuelle ;
le fait que le contrôleur (600, 700) cartographie l'information extraite en tant qu'information de routage de VPN en fonction d'une table de cartographie ; et
le fait que le contrôleur (600, 700) envoie l'information de routage de VPN au dispositif de passerelle (6100 ; 7100).

2. Procédé selon la revendication 1, comprenant en outre :
la publication, par le dispositif PE (6010, 6020 ; 7010, 7020), de l'information de routage dans le VPN.

3. Procédé selon la revendication 1 ou 2, comprenant en outre :
la réception (S201), par le dispositif PE (6010, 6020 ; 7010, 7020), d'un paquet de données, dans lequel le paquet de données comprend une information d'adresse d'un dispositif terminal cible dans le SDN ; et
le fait que le dispositif PE (6010, 6020 ; 7010, 7020) recherche (S202), dans les informations de routage stockées localement, une information de routage cible qui concorde avec le dispositif terminal cible en fonction de l'information d'adresse du dispositif terminal cible, et qu'il envoie le paquet de données en fonction de l'information de routage cible.
